# EUROPÄISCHE PATENTANMELDUNG

(11) **EP 1 681 405 A1**
(43) Veröffentlichungstag der Anmeldung: **19.07.2006**
(21) Anmeldenummer: 05000623.8
(22) Anmeldetag: 13.01.2005
(51) Int. Cl.: E04F 15/02, E04F 15/20, B32B 21/02, G10K 11/168

(54) **Fussbodenpaneel**

(71) Anmelder: BERRY FINANCE NV, 8780 Oostrozebeke (BE)
(72) Erfinder: Eddy Boucké, 8930 Menen (BE)
(74) Vertreter: Grünecker, Kinkeldey, Stockmair & Schwanhäusser Anwaltssozietät

(57) **Zusammenfassung**

Es wird ein Fußbodenpaneel (1) beschrieben, das mit einer Trittflächenschicht (4), einem wenigstens zwei Kemschichten (6a, 6b) aus einem Holzwerkstoff enthaltenden Kern (6) und Elementen (3a, 3b) einer Verbindungseinrichtung (3) versehen ist, die an wenigstens zwei gegenüberliegenden Seiten (2a, 2b) angeordnet sind. Um ein derartiges Fußbodenpaneel auf einfache und effektive Weise mit einer verbesserten Schalldämmung auszurüsten, wird vorgeschlagen, die Kemschichten (6a, 6b) unmittelbar aufeinanderliegend anzuordnen und miteinander zu verkleben.

## Beschreibung

Die Erfindung bezieht sich auf ein Fußbodenpaneel der im Oberbegriff von Anspruch 1 erläuterten Art.

Ein derartiges Fußbodenpaneel ist aus der WO03/016655 bekannt. Das bekannte Fußbodenpaneel ist trittschalldämmend ausgeführt und enthält eine Schicht aus einem Schalldämmmaterial, beispielsweise aus Kork oder einem synthetischen Material, das an irgendeiner Stelle in den Aufbau des Fußbodenpaneels integriert ist. Während eine Anordnung direkt unterhalb der Trittflächenschicht bevorzugt ist, kann die Schicht des schalldämmenden Materials auch zwischen zwei Kemschichten aus Holz oder einem Holzwerkstoff, insbesondere einer MDF- und/oder HDF-Platte, angeordnet werden. Diese Anordnung zwischen zwei Kemschichten wird jedoch nur dann gewählt, wenn Schalldämmmaterial verwendet werden soll, das nicht direkt mit der Trittflächenschicht versehen werden kann. Das Schalldämmmaterial wird in aufgewickelter Form bereitgestellt und bei der Herstellung des Fußbodenpaneels in die Konstruktion integriert, was jedoch trotzdem einen zusätzlichen Aufwand erfordert.

Ein weiteres aus der EP 1 264 946 bekanntes Fußbodenpaneel besteht aus einer harten, verschleißfesten und dekorativen Trittflächenschicht und einem Kern aus einem Holzwerkstoff. Der Kern besteht aus einer einzigen Platte aus einem Holzwerkstoff, der beispielsweise Massivholz oder ein Holzfaserwerkstoff der bekannten Art, also beispielsweise eine Spanplatte, eine MDF-Platte oder eine HDF-Platte sein kann. Das bekannte Fußbodenpaneel ist mit Elementen einer Verbindungseinrichtung versehen, die an wenigstens zwei gegenüberliegenden Seiten angeordnet sind. Beim bekannten Fußbodenpaneel besteht der Kern aus nur einer Schicht, und die Elemente der Verbindungseinrichtung sind in die Schicht des Kerns eingearbeitet. Das bekannte Fußbodenpaneel enthält weiterhin wenigstens eine Schicht aus einem Schalldämmmaterial. Diese Schicht ist jedoch außerhalb des Kerns vorgesehen. Die Schalldämmschicht besteht aus einem Schalldämmmaterial, insbesondere aus Kunststoff.

Der Erfindung liegt die Aufgabe zugrunde, ein einfach herstellbares und effektiv schallgedämmtes Fußbodenpaneel bereitzustellen.

Die Aufgabe wird durch die im Anspruch 1 angegebene Erfindung gelöst.

Es hat sich herausgestellt, dass für eine wirksame Schalldämmung nicht unbedingt ein Schalldämmmaterial eingesetzt werden muss. Durch den mehrschichtigen Aufbau des Kems mit dem zwischen den Schichten angeordneten Klebstoff wird die Schallleitung wirksam unterbrochen, so dass sich auf einfache Weise auch ohne dazwischen angeordnetes Schalldämmmaterial eine gute Schalldämmung ergibt.

Vorteilhafte Weiterbildungen der Erfindung sind den Unteransprüchen zu entnehmen.

Eine weitere Verbesserung der Schalldämmung, insbesondere der Trittschalldämmung ergibt sich, wenn man die Elemente der Verbindungseinrichtung nur an einer der Kemschichten anordnet, die bevorzugt diejenige Kemschicht ist, die nicht mit der Trittflächenschicht versehen ist. Auf diese Weise werden die Kemschichten im Hinblick auf eine Schallübertragung zwischen benachbarten Paneelen im Wesentlichen voneinander abgekoppelt, was die Schalldämmung weiter verbessert. Es ist jedoch auch möglich, die Elemente der Verbindungseinrichtung an allen oder an einer separaten Schicht vorzusehen.

Das erfindungsgemäße Fußbodenpaneel ist besonders einfach herzustellen, wenn zwei Teilpaneele miteinander verklebt werden, wobei eines der Teilpaneele mit der Trittflächenschicht und das andere Teilpaneel mit den Elementen der Verbindungseinrichtung versehen ist.

Trotzdem kann zusätzlich eine weitere Schicht aus einem speziell für eine Schalldämmung entwickelten Material vorgesehen sein, die an jeder geeigneten Stelle, z.B. an den in der EP 1 264 946 beschriebenen Stellen unterhalb der Trittflächenschicht, direkt als unterste Auflageschicht oder oberhalb der untersten Auflageschicht angeordnet sein kann.

Die Erfindung eignet sich besonders für Fußbodenpaneele mit einer für eine mechanische Verriegelung ausgebildeten Verbindungseinrichtung. Derartige mechanisch verriegelnde, leimfreie Verbindungseinrichtungen sind in großer Zahl bekannt.

Die Erfindung eignet sich weiterhin besonders für Fußbodenpaneele, die an mehr als zwei gegenüberliegenden Seiten mit den Elementen der Verbindungseinrichtung versehen sind.

Die Schalldämmung wird weiter verbessert durch die Verwendung eines Klebstoffs, der im klebenden Zustand elastischer ist als die Kemschichten.

Ein Ausführungsbeispiel der Erfindung wird nachfolgend anhand der Zeichnungen näher erläutert. Es zeigen:
- Fig. 1: ein Teil eines erfindungsgemäßen Fußbodenpaneels in schematischer Darstellung, und
- Fig. 2: die herausvergrößerte Einzelheit A aus Fig. 1.

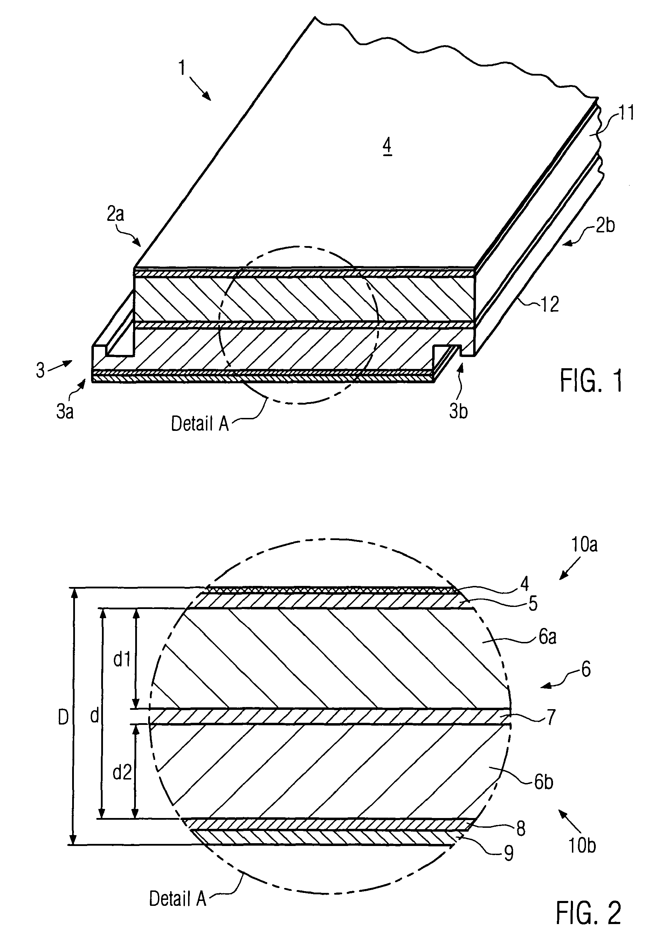

Fig. 1 zeigt in schematischer, perspektivischer Darstellung ein erfindungsgemäßes Fußbodenpaneel 1, das im dargestellten Ausführungsbeispiel die herkömmliche geometrische Gestalt aufweist, also im Wesentlichen lang rechteckig, brettartig ausgebildet ist und zwei Paare gegenüberliegender Seiten aufweist, wobei nur ein Paar der gegenüberliegenden, parallel zueinander verlaufenden Seiten 2a, 2b dargestellt ist und die Seiten des zweiten Paars rechtwinklig dazu verlaufen.

Wenigstens zwei gegenüberliegende Seiten, im dargestellten Ausführungsbeispiel die beiden parallelen Längsseiten 2a, 2b sind mit nur schematisch angedeuteten, korrespondierenden, positiven und negativen Elementen 3a, 3b einer Verriegelungseinrichtung 3 versehen.

Die Verriegelungseinrichtung kann vom üblichen, mechanisch verriegelnden Typ sein, der benachbarte Paneele sowohl in einer horizontalen und bevorzugt auch in einer vertikalen Ebene miteinander verriegelt, so dass auch ohne Leimeinsatz eine lagegesicherte Verbindung zwischen benachbarten Paneelen möglich ist. Derartige Verbindungseinrichtungen sind im Stand der Technik bekannt und enthalten positive und negative Elemente, die durch ein schräges Ansetzen und Herabwinkeln, gegebenenfalls mit einer begrenzten horizontalen Bewegung und/oder durch Verschnappen in horizontaler Richtung mit den negativen und positiven Elementen benachbarter Paneele die Verriegelung bewirken.

Eine besonders bevorzugte Verriegelungseinrichtung ist beispielsweise aus der WO94/26999 bekannt, deren Offenbarungsgehalt hiermit durch Bezugnahme eingeschlossen ist. Die dort beschriebene Verriegelungseinrichtung enthält neben den positiven und negativen Elementen zusätzlich einen Verriegelungsstreifen, der an der Unterseite des Paneels angeordnet ist und sich über eine der Längs- oder Querseiten hinaus erstreckt. Die freie Seite dieses Verriegelungsstreifens ist mit einem zusätzlichen Verriegelungs- oder Schnappelement versehen, das so ausgebildet ist, dass es in eine korrespondierende Vertiefung eingreifen kann, die sich an der anderen Längsseite des Paneels erstreckt, so dass benachbarte Paneele ebenfalls über den Verriegelungsstreifen miteinander verbunden sind. Eine weitere Verriegelungseinrichtung, die sich für die vorliegende Erfindung eignet, ist beispielsweise der WO97/47834 zu entnehmen. Diese Verriegelungseinrichtung enthält in die Elemente integrierte Schnapp- oder Rastvorsprünge und zugeordnete Vertiefungen.

Das Fußbodenpaneel 1 enthält eine Trittflächenschicht 4. Die Trittflächenschicht 4 befindet sich an der Oberseite des Paneels 1 und hat sowohl dekorative, als auch schützende als auch festigkeitssteigernde Eigenschaften. Geeignete Materialien für eine Trittflächenschicht sind bekannt und müssen nicht eingehend erläutert werden. So besteht z.B. eine geeignete Trittflächenschicht 4 aus einem Laminat aus einer Dekorschicht und einer schleißfesten Schutzschicht.

Die Trittflächenschicht 4 ist durch bekannte Maßnahmen, bevorzugt durch Verpressen, und gegebenenfalls über eine zusätzliche Schalldämmschicht 5, mit einem Kern 6 verbunden. Der Kern 6 besteht aus einem Holzwerkstoff, z.B. aus Massivholz oder einem Holzfaserwerkstoff unterschiedlichster Ausprägung, beispielsweise eine Spanplatte, jedoch bevorzugt eine MDF-Platte oder eine HDF-Platte. Der Kern 6 ist dasjenige Teil des Fußbodenpaneels 1, das den überwiegenden Beitrag zur Gesamtstärke D des Fußbodenpaneels 1 leistet und für eine Verwindungssteifigkeit und/oder Biegesteifigkeit des Fußbodenpaneels 1 sorgt. Aus diesem Grunde ist der Kern 6 diejenige Schicht eines Fußbodenpaneels 1 mit der größten Stärke d.

Erfindungsgemäß besteht der Kern 6 aus einer Mehrzahl horizontaler Kemschichten, wobei im dargestellten Ausführungsbeispiel zwei Kemschichten 6a und 6b vorgesehen sind. Die Kemschichten 6a, 6b können, wie im dargestellten Ausführungsbeispiel die gleiche Stärke d1, d2 aufweisen, können jedoch auch unterschiedlich stark sein. Die beiden Kemschichten 6a, 6b bestehen bevorzugt aus dem gleichen Holzwerkstoff, können jedoch auch aus unterschiedlichen Holzwerkstoffen bestehen.

Die Gesamtstärke D kann, wie bei Fußbodenpaneelen üblich, bei etwa 7 bis 11 mm liegen, kann jedoch auch stärker sein, beispielsweise 11 bis 15 mm betragen. Die Stärke d des Kems 6 kann im Wesentlichen der Stärke D entsprechen, insbesondere dann, wenn kein zusätzliches Schallschutzmaterial eingesetzt wird und wenn die Trittflächenschicht nur Bruchteile eines Millimeters dick ist. Die Stärken d1 und d2 können demzufolge bei 1/2 D liegen, wobei jedoch bevorzugt die Kemschicht 6a eine geringere Stärke als die Kemschicht 6b aufweist. Bevorzugt liegt die Stärke d1 der Kernschicht 6a bei 3 bis 6 mm, bevorzugt 5 mm, während die Stärke d2 der zweiten Kemschicht 6b bei 6 bis 10 mm, bevorzugt 8 mm, liegt.

Die beiden Kemschichten 6a, 6b sind unmittelbar aufeinanderliegend angeordnet und mit Hilfe eines Klebstoffs 7 miteinander verbunden. Die Verbindung erfolgt bevorzugt vollflächig, d.h. über die gesamten einander zugewandten Oberflächen der Kemschichten 6a, 6b. Im dargestellten Ausführungsbeispiel ist der Klebstoff 7 als Schicht dargestellt, es ist jedoch auch möglich, den Klebstoff dünn aufzutragen, so dass er lediglich die Unebenheiten in den einander gegenüberliegenden Oberflächen der Kemschichten 6a, 6b ausfüllt. Der Klebstoff 7 sollte elastisch sein und sollte bevorzugt elastischer sein als das Material der beiden Kemschichten 6a, 6b. Als Klebstoff 7 sind eine Vielzahl Klebstoffe einsetzbar, die zum Verbinden von Oberflächen aus Holz oder Holzwerkstoffen geeignet sind. Dies sind beispielsweise Schmelzklebstoffe, wie sie beispielsweise zum Kleben von Fumieren eingesetzt werden, Dispersionsklebstoffe bzw. Lösungsmittelklebstoffe (z.B. Weißleim), Kontaktklebstoffe, wie sie beispielsweise für Spanplatten oder Hartfaserplatten eingesetzt werden, Leime, wie beispielsweise Tischlerleim, wie er herkömmlich für Holzverbindungen eingesetzt wird, oder Reaktionsklebstoffe, z.B. Mehrkomponenten-Klebstoffe auf Epoxydharzbasis, oder UF(Hamstoff-Formaldehyd)-, MF(Melamin-Formaldehyd)-, PF(Phenol-Formaldehyd)-, oder RF(Resorcin-Formaldehyd)-Harze. Der Klebstoff 7 kann jedoch auch dicker aufgetragen werden, als dies für die reine Verbindungsaufgabe notwendig wäre. Es hat sich jedoch herausgestellt, dass der Klebstoff 7 in der Lage ist, beide Kemschichten 6a, 6b im Hinblick auf eine Schallübertragung zu isolieren.

Der Kern 6, insbesondere die zweite Kemschicht 6b, kann nach unten hin frei liegen, kann jedoch auch mit einer herkömmlichen Ausgleichsschicht 8 und/oder mit einer Schalldämmschicht 9 herkömmlicher Ausgestaltung versehen sein. Die Ausgleichsschicht 8 und/oder die Schalldämmschicht 9 sind mit Hilfe herkömmlicher Maßnahmen, z.B. durch Verpressen, am Kern 6 befestigt.

Wie insbesondere Fig. 1 zeigt, sind die Elemente 3a, 3b in derjenigen Kemschicht, d.h. der zweiten Kernschicht 6b, vorgesehen, die nicht mit der Trittflächenschicht 4 versehen ist. Auf diese Weise wird eine wirksame Abkopplung zwischen der Trittflächenschicht und einem benachbarten Paneel im Hinblick auf Schallübertragung geschaffen. Die Elemente können jedoch auch in beiden Kemschichten 6a, 6b und/oder einer zusätzlichen Schicht, z. B. der Ausgleichsschicht 8 oder dgl., vorgesehen sein.

Das erfindungsgemäße Fußbodenpaneel 1 wird bevorzugt hergestellt, indem zunächst zwei Teilpaneele 10a und 10b hergestellt werden. Insbesondere wird das erste Teilpaneel 10a aus der ersten Kemschicht 6a aufgebaut, die die Form einer im Wesentlichen rechteckigen, brettartigen Platte aufweist, deren äußere Abmessungen entlang der gegenüberliegenden Seiten den äußeren Abmessungen des Fußbodenpaneels im Verbund des fertig verlegten Fußbodens entsprechen. Das erste Teilpaneel 10a enthält weiterhin die Trittflächenschicht 4, gegebenenfalls die die Trittflächenschicht 4 tragende, herkömmliche Schalldämmschicht 5 und gegebenenfalls noch weitere Schichten, die der Trittflächenschicht zugeordnet sind. Die Umfangsflächen 11 des ersten Teilpaneels 10a sind bevorzugt glatt und erstrecken sich bevorzugt rechtwinklig zur Trittflächenschicht 4.

Das zweite Teilpaneel 10b enthält die zweite Kemschicht 6b, die ebenfalls als langrechteckige, brettartige Platte ausgebildet ist, jedoch um die Abmessungen eines der Elemente 3a, 3b größer ist als die erste Kemschicht 6a. Die Seiten- oder Umfangsflächen 12 der zweiten Kemschicht 6b sind in üblicher Weise mit den Elementen 3a, 3b der Verbindungseinrichtung 3 versehen. Im dargestellten Ausführungsbeispiel werden die Elemente 3a, 3b aus dem Material der zweiten Kemschicht 6b herausgearbeitet, bevorzugt herausgefräst.

Weiterhin enthält die zweite Kemschicht 6b gegebenenfalls die Schicht 9 aus Schalldämmmaterial, die über die bevorzugt vorhandene Ausgleichsschicht 8 mit der Kemschicht 6b verbunden ist. Beide Teilpaneele 10a, 10b werden dann über den schalldämmenden Klebstoff 7 miteinander verbunden.

Die Teilpaneele 10a, 10b können auch aus herkömmlichen Einzelpaneelen hergeleitet werden. Dabei wird lediglich die Trittflächenschicht des zweiten Teilpaneels 10b durch das erste Teilpaneel 10a ersetzt, und das erste Teilpaneel 10a mit einer verleimungsfähigen unteren Oberfläche versehen.

In Abwandlung der beschriebenen und gezeichneten Ausführungsbeispiele können auch mehr als zwei Kemschichten vorgesehen sein, die über mehr als eine Schicht aus Klebstoff miteinander verbunden sind, wobei alle diese Trennflächen und Klebstoffschichten als Trittschalldämmung dienen können.

## Patentansprüche

1. Fußbodenpaneel (1), mit einer Trittflächenschicht (4), einem wenigstens zwei Kemschichten (6a, 6b) aus einem Holzwerkstoff enthaltenden Kern (6) und Elementen (3a, 3b) einer Verbindungseinrichtung (3), die an wenigstens zwei gegenüberliegenden Seiten (2a, 2b) angeordnet sind, **dadurch gekennzeichnet, dass** die Kemschichten (6a, 6b) unmittelbar aufeinanderliegend angeordnet und miteinander verklebt sind.

2. Fußbodenpaneel nach Anspruch 1, **dadurch gekennzeichnet, dass** die Elemente (3a, 3b) der Verbindungseinrichtung (3) an einer der Kemschichten (6a, 6b) angeordnet sind.

3. Fußbodenpaneel nach Anspruch 1 oder 2, **dadurch gekennzeichnet, dass** die Elementen (3a, 3b) der Verbindungseinrichtung (3) an einer nicht mit der Trittflächenschicht (4) versehenen Kemschicht (6b) angeordnet sind.

4. Fußbodenpaneel nach einem der Ansprüche 1 bis 3, **dadurch gekennzeichnet, dass** zwei miteinander verklebte Teilpaneele (10a, 10b) vorgesehen sind, wobei ein Teilpaneel (10a) mit der Trittflächenschicht (4) und wenigstens ein Teilpaneel (10b) mit den Elementen (3a, 3b) versehen ist.

5. Fußbodenpaneel nach einem der Ansprüche 1 bis 4, **dadurch gekennzeichnet, dass** eine Schicht (9) aus einem Schalldämmungsmaterial vorgesehen ist.

6. Fußbodenpaneel nach einem der Ansprüche 1 bis 5, **dadurch gekennzeichnet, dass** die Verbindungseinrichtung (3) zum mechanischen Verriegeln benachbarter Paneele (1) durch Herabwinkeln und/oder Verschnappen in horizontaler Richtung zum Herstellen einer Verriegelung sowohl in einer vertikalen als auch in einer horizontalen Ebene ausgebildet ist.

7. Fußbodenpaneel nach einem der Ansprüche 1 bis 6, **dadurch gekennzeichnet, dass** das Paneel (1) zwei Paar von sich jeweils gegenüberliegenden Seiten (2a, 2b) aufweist und Elemente (3a, 3b) der Verbindungseinrichtung (3) an beiden Paaren vorgesehen sind.

8. Fußbodenpaneel nach einem der Anspruch 1 bis 7, **dadurch gekennzeichnet, dass** die Kemschichten (6a, 6b) mit Hilfe eines Klebstoffs (7) verbunden sind, der elastischer als der Holzwerkstoff der Kemschichten (6a, 6b) ist.
